# EUROPEAN PATENT APPLICATION

(11) **EP 4 765 351 A1**
(43) Date of publication of application: **24.06.2026**
(21) Application number: 25209400.8
(22) Date of filing: 17.10.2025
(51) Int. Cl.: H01M 50/103, H01M 50/15, H01M 50/176, H01M 50/184, H01M 50/186, H01M 50/342, H01M 50/593

(54) **SECONDARY BATTERY INCLUDING INSULATING MEMBER**

(30) Priority: 18.12.2024 KR 20240190601
(71) Applicant: SAMSUNG SDI CO., LTD., Yongin-si, Gyeonggi-do 17084 (KR)
(72) Inventor: GUEN, Minhyung, 17084 Yongin-si (KR); SON, Seongbo, 17084 Yongin-si (KR)
(74) Representative: Marks & Clerk LLP

(57) **Abstract**

The present disclosure relates to a secondary battery including an insulating member. The secondary battery includes an electrode assembly, a case in which the electrode assembly is accommodated, a cap plate comprising a terminal electrically connected to the electrode assembly and bonded to the case, and an insulating member interposed between the electrode assembly and the cap plate in the case, wherein the insulating member includes a first body and a second body located adjacent to one another in a longitudinal direction, and a connection body located between the first body and the second body and comprising a first groove into which at least a portion of the first body is inserted and a second groove into which at least a portion of the second body is inserted.

## Description

### FIELD

The present disclosure relates to a secondary battery comprising an insulating member that insulates a cap plate from an electrode assembly.

### BACKGROUND

Different from primary batteries that cannot be charged, secondary batteries are batteries that can be charged and discharged. In general, a secondary battery includes an electrode assembly including positive and negative electrodes, a case for accommodating the electrode assembly, electrode terminals connected to the electrode assembly, and a vent for degassing a gas generated inside the case.

The herein information disclosed in this Background section is for enhancement of understanding of the background of the present disclosure, and therefore, it may contain information that does not constitute a related (or prior) art.

### SUMMARY

The present disclosure is directed to providing a secondary battery allowed to reduce product defects due to fracture of an insulating member in response to an external force provided in a test environment and/or an actual use environment.

According to an aspect of the present disclosure, there is provided a secondary battery including an electrode assembly, a case in which the electrode assembly is embedded, a cap plate comprising a terminal electrically connected to the electrode assembly and bonded to the case, and an insulating member interposed between the electrode assembly and the cap plate in the case, wherein the insulating member includes a first body and a second body located adjacent to one another in a longitudinal direction, and a connection body located between the first body and the second body and comprising a first groove into which at least a portion of the first body is inserted and a second groove into which at least a portion of the second body is inserted.

In some embodiments, the first body and the second body are fitted and coupled to the first groove and the second groove of the connection body, respectively.

In some embodiments, the connection body comprises a through-hole passing through a thickness.

In some embodiments, the through-hole is open toward the cap plate and the electrode assembly.

In some embodiments, the cap plate comprises a vent; and the through-hole is open toward the vent.

In some embodiments, the cap plate comprises an electrolyte inlet; and the through-hole is open toward the electrolyte inlet.

In some embodiments, each of the first body, the second body, and the connection body is formed of one of rubber, polypropylene (PP), polyphenylsulfone (PPS), homo PP, random PP, and block PP, or two or more selected from the group consisting of these materials.

In some embodiments, the connection body is formed of a material with higher rigidity compared to the first body and the second body.

In some embodiments, the first groove and the second groove are open in a width direction.

In some embodiments, the first body comprises a first guide rail provided by being partially recessed inwardly in a thickness direction from at least one of one surface and another surface opposite to one another in the thickness direction; the second body comprises a second guide rail provided by being partially recessed inwardly in a thickness direction from at least one of one surface and the other surface opposite to one another in the thickness direction; and the connection body comprises a first guide protrusion that is slidably fastened to the first guide rail in the width direction, and a second guide protrusion that is slidably fastened to the second guide rail in the width direction.

In some embodiments, the first guide rail and the second guide rail are open in the width direction.

In some embodiments, the first guide rail and the second guide rail are formed on a surface of the one surface and the other surface adjacent to the electrode assembly.

In some embodiments, the insulating member is fixed to the cap plate or the case in a state in which at least a portion of the insulating member is convexly deformed in one direction.

In some embodiments, the insulating member is fixed in a state in which at least a portion of the insulating member is convexly deformed toward the cap plate.

In some embodiments, the terminal comprises a protrusion; and the insulating member is fastened to the protrusion passing through a first through-hole, which is formed in the cap plate, and fixed to the cap plate.

In some embodiments, the protrusion passes through the first through-hole and a second through-hole, formed in the insulating member, and is electrically connected to the electrode assembly.

In some embodiments, the secondary battery further comprises a connector configured to detour the insulating member or pass through a through-hole formed in the insulating member and electrically connect the terminal and the electrode assembly.

There is also provided an insulating member for a secondary battery comprising an electrode assembly, a case in which the electrode assembly is accommodated, and a cap plate bonded to the case, the cap plate comprising a terminal electrically connected to the electrode assembly, the insulating member comprising: a first body; a second body located adjacent to the first body in a longitudinal direction; and a connection body located between the first body and the second body and comprising a first groove into which at least a portion of the first body is inserted and a second groove into which at least a portion of the second body is inserted.

In some embodiments, the connection body comprises a through-hole passing through a thickness.

In some embodiments, the first body comprises a first guide rail provided by being partially recessed inwardly in a thickness direction from at least one of one surface and another surface opposite to one another in the thickness direction; the second body comprises a second guide rail provided by being partially recessed inwardly in a thickness direction from at least one of one surface and the other surface opposite to one another in the thickness direction; and the connection body comprises a first guide protrusion that is slidably fastened to the first guide rail in a width direction, and a second guide protrusion that is slidably fastened to the second guide rail in the width direction.

The insulating member may be fitted to the secondary battery as disclosed above or herein.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic diagram illustrating a secondary battery according to the present disclosure;
FIG. 2 is a cross-sectional view along I-I' of FIG. 1;
FIG. 3 is a diagram for briefly describing a coupling relationship between a cap plate, an electrode assembly, and an insulating member located therebetween according to the present disclosure;
FIG. 4 is a diagram for describing a problem that may occur in response to a provided external force;
FIGS. 5 and 6 are schematic diagrams illustrating an insulating member according to embodiments of the present disclosure;
FIG. 7 is a schematic diagram illustrating an insulating member according to embodiments of the present disclosure;
FIG. 8 is a schematic diagram illustrating an insulating member according to still further embodiments of the present disclosure;
FIG. 9 is a schematic diagram illustrating a state in which the insulating member according to still embodiments of the present disclosure is deformed due to a provided external force; and
FIG. 10 is a diagram illustrating a secondary battery including the insulating member according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

The electrode assembly is accommodated inside the case, and the electrode terminals and the vent are assembled with a cap plate and exposed to the outside. In addition, an electrolyte inlet is formed in the cap plate. After the electrode assembly is inserted inside the case and the cap plate is bonded to the case, an electrolyte is injected through the electrolyte inlet and the electrolyte inlet is sealed with a sealing plug. An insulating member may be provided at a lower portion of the cap plate to insulate an electrode plate from a current collector of the electrode assembly inside the secondary battery. The insulating member may be referred to as a bottom insulator.

In a stability test environment and/or actual use environment, the insulating member may be deformed or damaged due to an applied external force, and thus deformation or fracture may occur in the electrode assembly. In this case, due to the deformation or fracture of the insulating member, product defects may occur, such as causing a short circuit between the cap plate and the electrode assembly or direct damage to the electrode assembly.

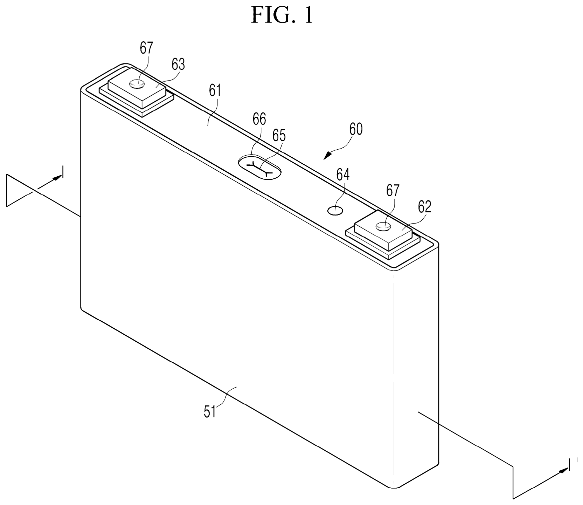

FIG. 1 is a schematic diagram illustrating a secondary battery according to the present disclosure.

A case 51 forms the overall exterior of a prismatic secondary battery and may be formed of a conductive metal such as aluminum, an aluminum alloy, or a nickel-plated steel. However, the present disclosure is not limited thereto, and the case may be implemented in a pouch case in addition to a can-shaped case and implemented in a cylindrical-shape case in addition to a prismatic case. Hereinafter, for convenience of description, an example in which the secondary battery case is a can-shaped case will be described. The case 51 may provide a space in which an electrode assembly is accommodated.

A cap assembly 60 may include a cap plate 61 that covers the opening of the case 51. In some examples, the case 59 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

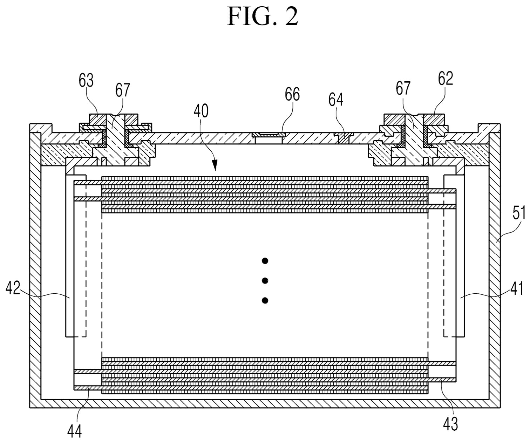

FIG. 2 is a cross-sectional view taken along the line I-I' of FIG. 1, according to some embodiments of the present disclosure. With reference to FIG. 2, the internal structure of the prismatic secondary battery and the coupling structure with the cap assembly 60 will be further described.

As shown in FIG. 2, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. If the electrode assembly 40 is a wound type, a winding axis may be parallel to the longitudinal direction of the case 51. In some other embodiments, the electrode assembly 40 is a stack type rather than a wound type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to one another and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 may be located on the right side of the electrode assembly 40, and the second electrode tab 44 may be located on the left side of the electrode assembly 40, or may be located on one side in the same direction. Also, in some embodiments, the first electrode tab 43 and the second electrode tab 44 may be located on the upper side of the electrode assembly 40. Here, the left, right, and upper sides are for convenience of explanation based on the secondary battery illustrated in FIG. 1, and their positions may change when the secondary battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate may extend from both ends of the electrode assembly 40 as described herein, respectively.

In some embodiments, the electrode assembly 40 is accommodated in the case 51 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned herein, in some embodiments in which the first electrode tab 43 and the second electrode tab 44 are located at the top of the electrode assembly 40, the first and second current collectors are located at the top of the electrode assembly 40.

The first current collector 41 and the second current collector 42 are connected to the first terminal 62 and the second terminal 63 through connection members 67, respectively. In some embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

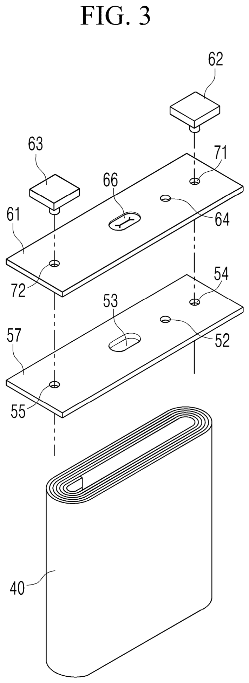

FIG. 3 is a diagram for briefly describing a coupling relationship between a cap plate, an electrode assembly, and an insulating member located therebetween according to the present disclosure.

An insulating member 57 may be interposed between an upper portion of the electrode assembly 40 and a lower portion of the cap plate 61 to electrically insulate the electrode assembly 40 from the cap plate 61. The insulating member 57 may include an electrolyte passing hole 52 communicating with the electrolyte inlet 64 of the cap plate 61, and a gas passing hole 53 communicating with the vent 66 of the cap plate 61.

The terminals 62 and 63 may include protrusions, and the protrusions may pass through through-holes 71 and 72 formed in the cap plate 61 and through-holes 54 and 55 formed in the insulating member 57 at positions corresponding to the through-holes 71 and 72, thereby being electrically connected to the electrode tabs of the electrode assembly 40. Although not shown in the drawing, the terminals 62 and 63 may be electrically connected to the electrode tabs of the electrode assembly 40 through a separate connector that detours the insulating member 57 or extends to pass through the through-holes 54 and 55 of the insulating member 57.

The insulating member 57 may be fixed to the lower portion of the cap plate 61 by the protrusions. However, the present disclosure is not limited thereto, and the insulating member 57 may be fixed to the cap plate 61 or the case 51 structurally or using at least one known fixing member so as to be located between the cap plate 61 and the electrode assembly 40.

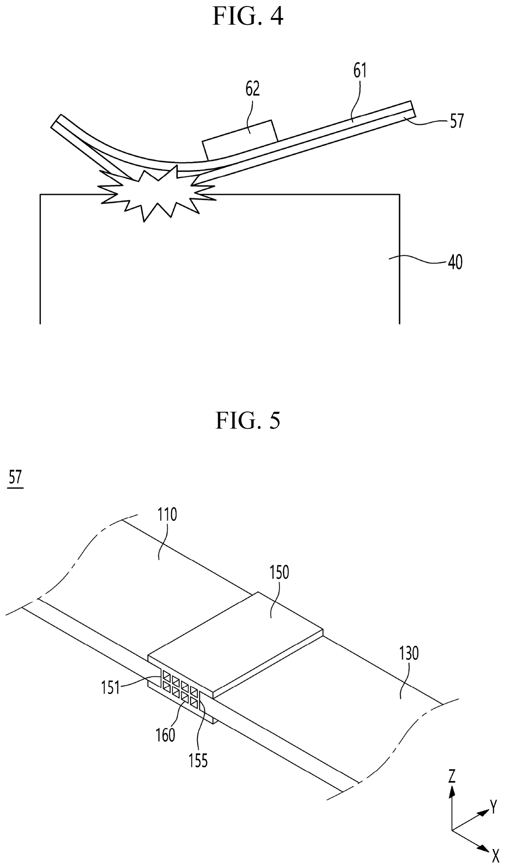

FIG. 4 is a diagram for describing a problem that may occur in response to a provided external force.

Secondary batteries may explode due to high temperature and high pressure inside the battery, which may be caused by abnormal operating conditions of the battery, such as an internal short circuit, an overcharging state exceeding allowed current and voltage, exposure to high temperature, or deformation due to dropping or an external impact. In order to prevent this in advance, various stability tests are being conducted to secure product stability and reliability. In particular, the stability test may include an impact test for examining the behavior of the secondary battery in response to an event that occurs due to deformation caused by an external force such as an external impact.

When an external force is applied to the secondary battery in an impact test environment or an actual use environment, deformation or fracture may occur in the cap plate 61 and insulating member 57 as shown in FIG. 4. In this case, due to the deformation or fracture of the insulating member 57, a defect in which a product does not perform its function, such as a short circuit between the cap plate 61 and the electrode assembly 40 may occur. That is, the insulating member 57 is a component interposed between the cap plate 61 and the electrode assembly 40 for an insulation purpose, but when a fracture occurs due to a provided external force, the insulating member 57 may not perform its function and a defect in which the cap plate 61 and the electrode assembly 40 are short-circuited may occur.

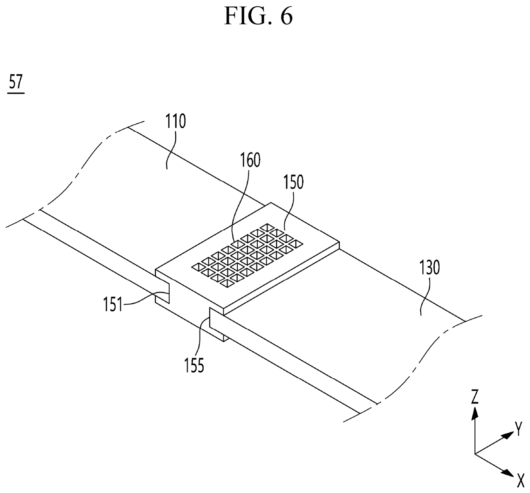

FIGS. 5 and 6 are schematic diagrams illustrating an insulating member according to embodimentsof the present disclosure.

Referring to FIG. 5, the insulating member 57 according to embodiments of the present disclosure may be disposed in the case 51 of FIG. 1 and interposed between the cap plate 61 of FIG. 3 and the electrode assembly 40 of FIG. 3. Preferably, the insulating member 57 may be positioned a predetermined distance apart from the electrode assembly 40. The insulating member 57 may be fixed to the cap plate 61 or to an inner side of the case 51. The insulating member 57 may include a first body 110, a second body 130, and a connection body 150. The first body 110 and the second body 130 may be disposed adjacent to one another in a longitudinal direction (e.g., an X-axis direction), and the connection body 150 may be disposed between the first body 110 and the second body 130 to be detachably fastened to the first body 110 and the second body 130.

The first body 110 may have a substantially hexahedral plate shape, but the present disclosure is not limited thereto.

The first body 110 may be formed of an insulating material. The first body 110 may be formed of one of rubber, polypropylene (PP), polyphenylsulfone (PPS), homo PP, random PP, and block PP, or two or more selected from the group consisting of these materials.

The second body 130 may be located adjacent to the first body 110 in the longitudinal direction.

The second body 130 may have a substantially hexahedral plate shape, but the present disclosure is not limited thereto.

The second body 130 may be formed of an insulating material. The second body 130 may be formed of one of rubber, PP, PPS, homo PP, random PP, and block PP, or two or more selected from the group consisting of these materials.

The second body 130 may be formed of the same material as the first body 110.

The connection body 150 may be located between the first body 110 and the second body 130. The connection body 150 may perform a function of restricting and constraining movement of the first body 110 and the second body 130 between the first body 110 and the second body 130. That is, the connection body 150 may constrain the movement of the first body 110 and the second body 130, thereby minimizing separation of the first body 110 and the second body 130 due to a provided external force.

The connection body 150 may include a first groove 151 configured to accommodate at least a portion of the first body 110 and a second groove 155 configured to accommodate at least a portion of the second body 130. The first groove 151 may be provided by being partially recessed inwardly from one side of the connection body 150 in the longitudinal direction. The first groove 151 may be open toward one end of the first body 110 to accommodate at least a portion of the one end of the first body 110. The first groove 151 may be open in a width direction (e.g., a Y-axis direction), but the present disclosure is not limited thereto. The first body 110 may be inserted into and fixed to the first groove 151 of the connection body 150. The first body 110 may be fitted and coupled to the first groove 151 and may maintain a coupled state unless a predetermined external force is applied.

The second groove 155 may be provided by being partially recessed inwardly from the other side of the connection body 150 in the longitudinal direction. The second groove 155 may be open toward one end of the second body 130 to accommodate at least a portion of the one end of the second body 130. The second groove 155 may be open in the width direction, but the present disclosure is not limited thereto. The second body 130 may be inserted into and fixed to the second groove 155 of the connection body 150. The second body 130 may be fitted and coupled to the second groove 155 and may maintain a coupled state unless a certain external force is applied.

The connection body 150 may be formed of one of rubber, PP, PPS, homo PP, random PP, and block PP, or two or more selected from the group consisting of these materials.

Preferably, the connection body 150 may be formed of a material with higher rigidity compared to the first body 110 and the second body 130. Thus, in response to the provided external force, the connection body 150 may more strongly constrain the separation of the first body 110 and the second body 130.

The connection body 150 may include a through-hole 160 passing through a thickness of the connection body 150. The through-hole 160 may be provided as a plurality of through-holes 160. The connection body 150 may perform a predetermined buffering function by the through-holes 160. For example, even when deformation occurs in the first body 110 and the second body 130 due to the provided external force and a pressure is applied to the connection body 150, the connection body 150 may maintain the coupled state without being separated from the first body 110 and the second body 130 through a buffering action.

Referring to FIG. 6, the through-holes 160 of the connection body 150 may be open toward the cap plate 61 and the electrode assembly 40. As an example, one end of the through-hole 160 of the connection body 150 may be open toward the vent formed in the cap plate 61. In this case, the through-hole 160 may serve as a gas passing hole through which a gas is discharged. As another example, one end of the through-hole 160 of the connection body 150 may be open toward the electrolyte inlet 64 of FIG. 3. In this case, the through-hole 160 may serve as an electrolyte passing hole through which an electrolyte is introduced.

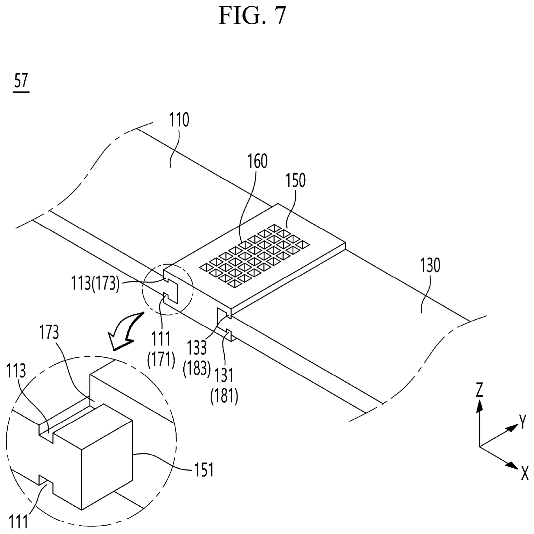

FIG. 7 is a schematic diagram illustrating an insulating member according to embodiments of the present disclosure. In describing embodiments of the present disclosure, a description of a configuration substantially the same configuration of embodiments of the present disclosure may be omitted.

Referring to FIG. 7, an insulating member 57 according to embodiments of the present disclosure may be disposed in the case 51 of FIG. 1 and interposed between the cap plate 61 of FIG. 3 and the electrode assembly 40 of FIG. 3. The insulating member 57 may be fixed to the cap plate 61 or to an inner side of the case 51. The insulating member 57 may include a first body 110, a second body 130, and a connection body 150.

The first body 110 may include guide rails 111 and 113 provided by being partially recessed inwardly in a thickness direction (e.g., a Z-axis direction) from at least one of one surface and the other surface opposite to one another in the thickness direction. Specifically, one end of the first body 110 may include a 1-1 guide rail 111 provided by being partially recessed inwardly from a lower surface in the thickness direction. The 1-1 guide rail 111 may be open in the width direction. One end of the first body 110 may include a 1-2 guide rail 113 provided by being partially recessed inwardly from an upper surface in the thickness direction. The 1-2 guide rail 113 may be open in the width direction.

The second body 130 may be located adjacent to the first body 110 in the longitudinal direction. The second body 130 may include guide rails 131 and 133 provided by being partially recessed inwardly in the thickness direction from at least one of one surface and the other surface opposite to one another in the thickness direction. Specifically, a 2-1 guide rail 131 may be open in the width direction. One end of the second body 130 may include a 2-2 guide rail 133 provided by being partially recessed inwardly from an upper surface in the thickness direction. The 2-2 guide rail 133 may be open in the width direction.

The connection body 150 may be located between the first body 110 and the second body 130. The connection body 150 may perform a function of restricting and constraining movement of the first body 110 and the second body 130 between the first body 110 and the second body 130. That is, the connection body 150 may constrain the movement of the first body 110 and the second body 130, thereby minimizing separation of the first body 110 and the second body 130 due to a provided external force.

The connection body 150 may include a first groove 151 configured to accommodate at least a portion of the first body 110 and a second groove 155 configured to accommodate at least a portion of the second body 130. The first groove 151 may be provided by being partially recessed inwardly from one side of the connection body 150 in the longitudinal direction. The first groove 151 may be open toward one end of the first body 110 to accommodate at least a portion of the one end of the first body 110. The first groove 151 may be open in the width direction, but the present disclosure is not limited thereto. The first body 110 may be inserted into and fixed to the first groove 151 of the connection body 150.

The second groove 155 may be provided by being partially recessed inwardly from the other side of the connection body 150 in the longitudinal direction. The second groove 155 may be open toward one end of the second body 130 to accommodate at least a portion of the one end of the second body 130. The second groove 155 may be open in the width direction, but the present disclosure is not limited thereto. The second body 130 may be inserted into and fixed to the second groove 155 of the connection body 150.

The connection body 150 may include a 1-1 guide protrusion 171 that is slidably fastened to the 1-1 guide rail 111 of the first body 110 in the width direction, and a 1-2 guide protrusion 173 that is slidably fastened to the 1-2 guide rail 113 of the first body 110 in the width direction. The connection body 150 may include a 2-1 guide protrusion 181 that is slidably fastened to the 2-1 guide rail 131 of the second body 130 in the width direction, and a 2-2 guide protrusion 183 that is slidably fastened to the 1-2 guide rail 113 of the second body 130 in the width direction.

The insulating member 57 according to embodiments of the present disclosure may prevent unwanted separation of the first body 110 and the second body 130 from the connection body 150 in response to the provided external force by improving a bonding force through a bonding structure of the guide rail and the guide protrusion. In addition, since the insulating member 57 according to embodiments of the present disclosure may be assembled in a sliding manner by the guide protrusion and the guide rail, process convenience can be significantly improved.

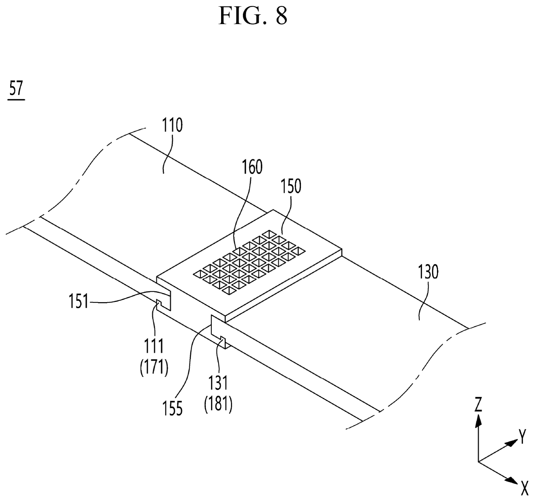

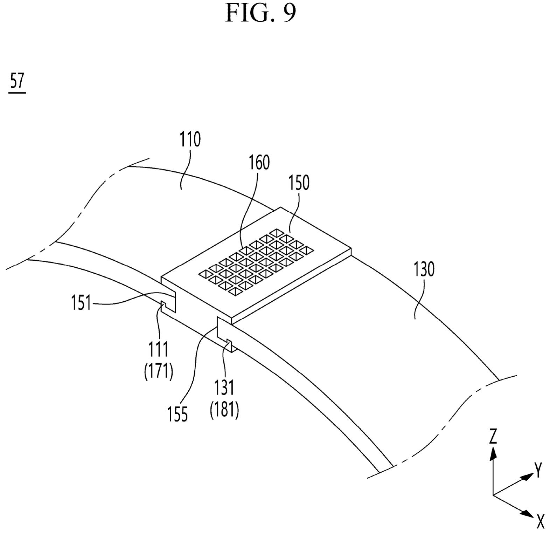

FIG. 8 is a schematic diagram illustrating an insulating member according to still further embodiments of the present disclosure. FIG. 9 is a schematic diagram illustrating a state in which the insulating member according to still further embodiments of the present disclosure is deformed due to a provided external force. In describing still embodiments of the present disclosure, a description of a configuration substantially the same configuration of embodiments of the present disclosure may be omitted.

Referring to FIG. 8, an insulating member 57 according to still further embodiments of the present disclosure may be disposed in the case 51 of FIG. 1 and interposed between the cap plate 61 of FIG. 3 and the electrode assembly 40 of FIG. 3. The insulating member 57 may be fixed to the cap plate 61 or to an inner side of the case 51. The insulating member 57 may include a first body 110, a second body 130, and a connection body 150.

The first body 110 may have a substantially hexahedral plate shape, but the present disclosure is not limited thereto.

The first body 110 may be formed of an insulating material.

One end of the first body 110 may include a first guide rail 111 provided by being partially recessed inwardly from a lower surface in the thickness direction. The first guide rail 111 may be open in the width direction.

The second body 130 may be located adjacent to the first body 110 in the longitudinal direction.

The second body 130 may have a substantially hexahedral plate shape, but the present disclosure is not limited thereto.

One end of the second body 130 may include a second guide rail 131 provided by being partially recessed inwardly from a lower surface in the thickness direction. The second guide rail 131 may be open in the width direction.

The connection body 150 may be located between the first body 110 and the second body 130. The connection body 150 may perform a function of restricting and constraining movement of the first body 110 and the second body 130 between the first body 110 and the second body 130. That is, the connection body 150 may constrain the movement of the first body 110 and the second body 130, thereby minimizing separation of the first body 110 and the second body 130 due to a provided external force.

The connection body 150 may include a first groove 151 configured to accommodate at least a portion of the first body 110 and a second groove 155 configured to accommodate at least a portion of the second body 130. The first groove 151 may be provided by being partially recessed inward from one side of the connection body 150 in the longitudinal direction. The first groove 151 may be open toward one end of the first body 110 to accommodate at least a portion of the one end of the first body 110. The first groove 151 may be open in the width direction, but the present disclosure is not limited thereto. The first body 110 may be inserted into and fixed to the first groove 151 of the connection body 150.

The second groove 155 may be provided by being partially recessed inwardly from the other side of the connection body 150 in the longitudinal direction. The second groove 155 may be open toward one end of the second body 130 to accommodate at least a portion of the one end of the second body 130. The second groove 155 may be open in the width direction, but the present disclosure is not limited thereto. The second body 130 may be inserted into and fixed to the second groove 155 of the connection body 150.

The connection body 150 may include a first guide protrusion 171 that is slidably fastened to the first guide rail 111 of the first body 110 in the width direction. The connection body 150 may include a second guide protrusion 181 that is slidably fastened to the second guide rail 131 of the second body 130 in the width direction.

The insulating member 57 according to these still further embodiments of the present disclosure may prevent unwanted separation of the first body 110 and the second body 130 from the connection body 150 in response to the provided external force by improving a bonding force through a bonding structure of the guide rail and the guide protrusion. In addition, since the insulating member 57 according to still embodiments of the present disclosure may be assembled in a sliding manner by the guide protrusion and the guide rail, process convenience can be significantly improved.

The insulating member 57 according to these still further embodiments of the present disclosure may have a structure that is able to induce deformation in response to the provided external force into a shape desired by a designer. More specifically, the insulating member 57 may be deformed in response to a provided external force in a test environment and/or an actual use environment. In consideration of this, in the still further embodiments of the present disclosure, as shown in FIG. 9, the coupling structure of the guide rail and the guide protrusion is formed only on the lower surface so that the insulating member 57 may be induced to be deformed convexly upward due to the provided external force. As an example, the insulating member 57 may be interposed between the cap plate 61 and the electrode assembly 40, and it may be advantageous in terms of product stability for the insulating member 57 to come into contact with the cap plate 61, which has relatively greater rigidity than the electrode assembly 40 has when deformed. Therefore, the insulating member 57 may be formed only on the lower surface (a surface adjacent to the electrode assembly 40) by forming the coupling structure of the guide rail and the guide protrusion so as to be deformed toward the cap plate 61 in response to the provided external force.

Although not shown in the drawings, in order to allow the insulating members 57 to be deformed in a desired direction in response to an external force provided, the insulating members 57 according to the embodiments shown in FIGS. 5 to 8 may be fixed to the cap plate 61 or the case 51 while partially deformed (bent) convexly in either an upward or downward direction.

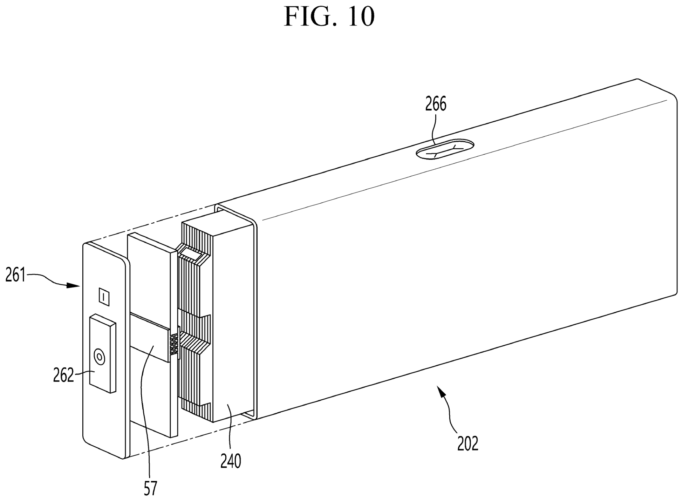

FIG. 10 is a diagram illustrating a secondary battery including the insulating member according to embodiments of the present disclosure.

Referring to FIG. 10, a case 202 forms the overall exterior of the secondary battery and may be formed of a conductive metal such as aluminum, an aluminum alloy, or a nickel-plated steel. One end or both ends of the case 202 may be open, and an electrode assembly 240 may be accommodated in the case 202. A vent 266 for degassing a gas generated inside the battery may be installed at least one surface of the case 202.

A cap assembly may include a cap plate 261 covering openings of one end or both ends of the case 202. A first terminal 262 may be installed in the cap assembly 261. The first terminal 262 may be electrically connected to either a positive or negative electrode of the inside electrode assembly 240. As an example, in a structure in which cap assemblies are installed at both ends of the case 202, a second terminal may be installed on one cap assembly. The second terminal may be electrically connected to the other of the positive and negative electrodes of the inside electrode assembly 240. As another example, the case may serve as a terminal on its own.

The insulating member 57 according to the embodiment of the present disclosure may be interposed between the cap plate 261 and the electrode assembly 240 and fixed to the cap plate 261 or the case 202 at a preset position. In the structure in which the cap assemblies are installed at both ends of the case 202, the insulating member 57 according to the embodiment of the present disclosure may be interposed between one end of the cap plate 261 and the electrode assembly 240 and between the other end of the cap plate and the electrode assembly 240 and fixed to the cap plate or the case at a preset position.

According to the present disclosure, a secondary battery that can reduce product defects due to fracture of an insulating member in response to an external force provided in a test environment and/or an actual use environment can be provided. Accordingly, the present disclosure has the advantage of securing product stability and reliability of the secondary battery.

Although the present disclosure has been described herein with respect to embodiments thereof, the present disclosure is not limited thereto. Various modifications and variations can be made thereto by those skilled in the art within the scope of the present invention as defined by the appended claims and their equivalents.

## Claims

1. A secondary battery comprising:
an electrode assembly;
a case in which the electrode assembly is accommodated;
a cap plate bonded to the case, the cap plate comprising a terminal electrically connected to the electrode assembly; and
an insulating member interposed between the electrode assembly and the cap plate in the case,
wherein the insulating member comprises a first body and a second body located adjacent to one another in a longitudinal direction, and a connection body located between the first body and the second body and comprising a first groove into which at least a portion of the first body is inserted and a second groove into which at least a portion of the second body is inserted.

2. The secondary battery as claimed in claim 1, wherein the first body and the second body are fitted and coupled to the first groove and the second groove of the connection body, respectively.

3. The secondary battery as claimed in claim 1 or claim 2, wherein the connection body comprises a through-hole passing through a thickness.

4. The secondary battery as claimed in claim 3, wherein the through-hole is open toward the cap plate and the electrode assembly.

5. The secondary battery as claimed in claim 4, wherein:
the cap plate comprises a vent; and
the through-hole is open toward the vent.

6. The secondary battery as claimed in any one of the preceding claims, wherein the connection body is formed of a material with higher rigidity compared to the first body and the second body.

7. The secondary battery as claimed in any one of the preceding claims, wherein the first groove and the second groove are open in a width direction.

8. The secondary battery as claimed in claim 7, wherein:
the first body comprises a first guide rail provided by being partially recessed inwardly in a thickness direction from at least one of one surface and another surface opposite to one another in the thickness direction;
the second body comprises a second guide rail provided by being partially recessed inwardly in a thickness direction from at least one of one surface and the other surface opposite to one another in the thickness direction; and
the connection body comprises a first guide protrusion that is slidably fastened to the first guide rail in the width direction, and a second guide protrusion that is slidably fastened to the second guide rail in the width direction.

9. The secondary battery as claimed in any one of the preceding claims, wherein the insulating member is fixed to the cap plate or the case in a state in which at least a portion of the insulating member is convexly deformed in one direction.

10. The secondary battery as claimed in any one of the preceding claims, wherein:
the terminal comprises a protrusion; and
the insulating member is fastened to the protrusion passing through a first through-hole, which is formed in the cap plate, and fixed to the cap plate.

11. The secondary battery as claimed in claim 10, wherein the protrusion passes through the first through-hole and a second through-hole, formed in the insulating member, and is electrically connected to the electrode assembly.

12. The secondary battery as claimed in any one of the preceding claims, further comprising a connector configured to detour the insulating member or pass through a through-hole formed in the insulating member and electrically connect the terminal and the electrode assembly.

13. An insulating member for a secondary battery comprising an electrode assembly, a case in which the electrode assembly is accommodated, and a cap plate bonded to the case, the cap plate comprising a terminal electrically connected to the electrode assembly,
the insulating member comprising:
a first body;
a second body located adjacent to the first body in a longitudinal direction; and
a connection body located between the first body and the second body and comprising a first groove into which at least a portion of the first body is inserted and a second groove into which at least a portion of the second body is inserted.

14. The insulating member as claimed in claim 13, wherein the connection body comprises a through-hole passing through a thickness.

15. The insulating member as claimed in claim 13 or claim 14, wherein:
the first body comprises a first guide rail provided by being partially recessed inwardly in a thickness direction from at least one of one surface and another surface opposite to one another in the thickness direction;
the second body comprises a second guide rail provided by being partially recessed inwardly in a thickness direction from at least one of one surface and the other surface opposite to one another in the thickness direction; and
the connection body comprises a first guide protrusion that is slidably fastened to the first guide rail in a width direction, and a second guide protrusion that is slidably fastened to the second guide rail in the width direction.
